# EUROPÄISCHE PATENTSCHRIFT

(11) **EP 2 495 930 B1**
(45) Veröffentlichungstag und Bekanntmachung des Hinweises auf die Patenterteilung: **19.07.2017**
(21) Anmeldenummer: 12001163.0
(22) Anmeldetag: 22.02.2012
(51) Int. Cl.: G07F 7/10, G06F 21/34, G06F 21/77, G06Q 20/34, H04L 29/06, H04L 29/08, G06K 17/00

(54) **Tragbarer Datenträger mit Internet-Funktionalität**
Portable data carrier with Internet functionality
Support de données portatif doté d'une fonctionnalité Internet

(30) Priorität: 03.03.2011 DE 102011012914
(43) Veröffentlichungstag der Anmeldung: 05.09.2012
(73) Patentinhaber: Giesecke & Devrient GmbH, 81677 München (DE)
(72) Erfinder: Hinz, Walter, 85748 Garching (DE)

(56) Entgegenhaltungen:
- US-B1- 6 751 671
- REES J ET AL: "WEBCARD: A JAVA CARD WEB SERVER", IFIP WORKING CONFERENCE ON SMART CARD RESEARCH AND ADVANCED APPLICATIONS (IFIP CARDIS), 20. September 2000 (2000-09-20), Seiten 197-207, XP001013569,
- GUTHERY S ET AL: "IP and ARP over ISO 7816; draft-guthery-ip7816-01.txt", INTERNET ENGINEERING TASK FORCE (IETF), Januar 2001 (2001-01), XP015013872,
- HONGQIAN KAREN LU: "Network smart card review and analysis", COMPUTER NETWORKS, ELSEVIER SCIENCE PUBLISHERS, Bd. 51, Nr. 9, 29. April 2007 (2007-04-29) , Seiten 2234-2248, XP022122105, ISSN: 1389-1286

## Beschreibung

Die Erfindung betrifft allgemein das technische Gebiet der tragbaren Datenträger und spezieller das Gebiet der Datenträger, die eine Funktionalität als Internet-Server und/oder Internet-Client aufweisen. Derartige Datenträger können beispielsweise in der Bauform einer Chipkarte oder eines kompakten Chipmoduls ausgestaltet sein.

Die Offenlegungsschriften EP 2 045 992 A1 und WO 2009/ 043840 A1, die einer gemeinsamen Patentfamilie angehören, zeigen eine als SIM (*Subscriber Identity Module*) ausgestaltete Chipkarte. Die Chipkarte ist an einen persönlichen Computer (PC) angeschlossen, auf dem spezielle Softwaremodule installiert sind. Um die SIM-Funktionen der Chipkarte zu verwalten, baut der PC zunächst eine TCP/ IP-Verbindung zur Chipkarte auf. Die Chipkarte sendet dann über diese TCP/IP-Verbindung eine HTTP-Anfrage an den PC. Diese Anfrage wird entweder lokal durch den PC oder durch einen externen Server beantwortet, und die so erhaltene HTTP-Antwort wird von dem PC über die TCP/ IP-Verbindung an die Chipkarte übermittelt.

Bei diesem bekannten System besteht jedoch die Schwierigkeit, dass die benötigte Software auf dem PC vorab installiert werden muss. Dies schränkt die Benutzbarkeit des Systems ein, weil in vielen Firmen und auch z.B. in Internet-Cafés die Installation neuer Software untersagt ist und/ oder durch technische Mittel unterbunden wird.

Eine ähnliche Schwierigkeit ergibt sich bei der Verwendung von Datenträgern mit Internet-Funktionalität, wie sie von der Anmelderin gegenwärtig unter der Marke "*Internet Smart Card*" vertrieben werden. Derartige Datenträger sind z.B. in der Broschüre "*Internet Smart Card - security2go* - *WebServer*" der Giesecke & Devrient GmbH, 2007, Art.-Nr. 288 6093, beschrieben. Diese Datenträger werden über eine USB-Schnittstelle an einen Host-Computer angeschlossen und z.B. über die RNDIS-Architektur (*Remote Network Driver Interface Specification*) mit dem TCP/IP-Protokollstapel des Host-Computers verbunden.

Zur Verwendung einer *Internet Smart Card* braucht in der Regel kein spezieller Treiber auf dem Host-Computer installiert zu werden, weil übliche Betriebssysteme bereits die erforderlichen Treiber enthalten. Es muss jedoch eine logische Verknüpfung zwischen diesen Treibern und dem Datenträger eingerichtet werden, wofür Administratorrechte erforderlich sind. Hierdurch wird wiederum die "nomadische Nutzung" der *Internet Smart Card* (z.B. die Nutzung in Internet-Cafes oder auf anderen öffentlichen Rechnern) sowie die Benutzbarkeit auf Firmenrechnern verhindert oder zumindest eingeschränkt. Dies ist insbesondere problematisch, wenn die *Internet Smart Card* als Sicherheitsmodul zur Speicherung von geheimen Schlüsseldaten oder zur Signatur von Daten oder zur Authentisierung des Nutzers dient, weil die Nutzung solcher Sicherheitsfunktionen gerade bei öffentlich zugänglichen Rechnern besonders wünschenswert wäre.

Die Offenlegungsschrift WO 2008/058741 A2 zeigt einen tragbaren Datenträger, der beispielsweise als Flash-Speichermodul mit USB-Anschluss oder als Flash-Speicherkarte ausgebildet ist. Der Datenträger weist eine Steuereinheit und einen Flash-Speicherbereich auf. Ferner enthält der Datenträger ein Chipkarten-IC, das beispielsweise zum Ausführen von Signatur- oder Authentisierungsvorgängen eingerichtet ist. Der Datenträger kommuniziert mit einem angeschlossenen Host-Computer über ein Massenspeicherprotokoll, wie es üblicherweise für Flash-Speichermodule bzw. Flash-Speicherkarten verwendet wird. Dieses Protokoll kann beispielsweise Befehle zum Schreiben und Lesen von Datenblöcken aufweisen.

Befehle, die an das Chipkarten-IC gerichtet sind, werden vom Host-Computer in Schreibbefehle des Massenspeicherprotokolls eincodiert. Jeder solche Schreibbefehl weist einen angehängten Datenblock auf. In dem Datenblock ist eine Leitinformation enthalten, die in der Art einer magischen Zahl (*magic value*) einen langen und eindeutigen Bezeichner aufweist. Die Steuereinheit des Datenträgers untersucht eingehende Datenblöcke auf das Vorhandensein derartiger Bezeichner. Wenn ein solcher Bezeichner in einem Datenblock erkannt wird, so erzeugt die Steuereinheit des Datenträgers einen für das Chipkarten-IC vorgesehenen Befehl, der z.B. durch weitere im Datenblock enthaltene Werte bestimmt wird. Wenn die Steuereinheit dagegen keinen speziellen Bezeichner im Datenblock eines eingehenden Schreibbefehls erkennt, so verarbeitet die Steuereinheit diesen Schreibbefehl als "normalen" Schreibzugriff auf den Flash-Speicherbereich des Datenträgers.

Die gerade beschriebene Vorgehensweise gemäß der WO 2008/058741 A2 hat den Vorteil, dass der Datenträger ohne spezielle Treiber auch auf Host-Computern eingesetzt werden kann, für die der Benutzer nicht über Administratorrechte verfügt. Allerdings ist die Funktionalität des Datenträgers auf Signatur- und Authentisierungsvorgänge begrenzt. Überdies müssen diese Vorgänge mit Anwendungsprogrammen, die auf dem Host-Computer ausgeführt werden, abgestimmt sein. Ein Datenträger mit erweiterter Funktionalität wäre wünschenswert.

Aus der Veröffentlichung "WEBCARD: A JAVA CARD WEB SERVER" von Jim Rees, Peter Honeyman in IFIP CARDIS, 20.09.2000, ist weiter eine an sich übliche JAVA-fähige Chipkarte bekannt, auf der ein einfacher Webserver realisiert ist. Die Karte wird von einem Host über eine übliche ISO-Schnittstelle mittels APDUs angesprochen. Vom Host für die Karte bestimmte Datenpakete werden von einem auf dem Host installierten "Daemon" - einem Hintergrundprozess - in ISO-konforme APDUs verpackt und auf der Karte von einem Anwendungsprogramm wieder entpackt. Die bekannte Lösung kommt für Endgeräte in Betracht, die über eine geeignete ISO-Schnittstelle verfügen.

Aus der US 6751671 B1 ist desweiteren ein Kommunikationssystem für eine aus einem Netzwerk mit einem Server, einem Terminal und einer Smart Card bestehende Struktur bekannt, das es dem Server erlaubt, über das Terminal direkt mit der Smart Card zu kommunizieren. Die Smart Card kann die Funktion eines Webservers realisieren. Dazu werden vorbereitend in dem Terminal und in der Smart Card jeweils Protokollschichten eingerichtet, die eine Schnittstelle bilden, über die ein Datenaustausch zwischen Terminal und Smart Card möglich ist. Weiter werden in Terminal und Smart Card jeweils Softwareschichten eingerichtet, die es ermöglichen, über eine gegebene physikalische Verbindung zwischen Terminal und Smart Card einen bidirektionalen Datenaustausch durchzuführen. Wesentliche Bestandteile der Softwareschichten sind "intelligente Agenten", die u.a. Datenaustauschsitzungen eröffnen und Protokollkonvertierungen vornehmen. Die intelligenten Agenten setzen insbesondere übertragene Daten in Protokolle um, die für einen dem Terminal nachgeschalteten Navigator einerseits und für auf der Smart Card laufende Anwendungen andererseits verwertbar sind. Die Lösung bewirkt, dass das genutzte Terminal sich völlig transparent und isoliert von der Umgebung verhält. Aller Datenverkehr zwischen Terminal und Netzwerk fließt über die Smart Card. Das Terminal fungiert faktisch als Peripherie für die Smart Card.
Die Erfindung hat die Aufgabe, einen tragbaren Datenträger mit Internet-Funktionalität vorzuschlagen, der ohne Installationsvorgänge oder Administratorrechte an ein Endgerät angeschlossen werden kann. Erfindungsgemäß wird diese Aufgabe durch einen Datenträger mit den Merkmalen des Anspruchs 5, ein System mit den Merkmalen des Anspruchs 16 sowie Verfahren mit den Merkmalen der Ansprüche 1 bzw. 3 gelöst. Die abhängigen Ansprüche betreffen optionale Merkmale einiger Ausgestaltungen der Erfindung.

Die Erfindung geht von der Grundidee aus, einen mit Internet-Funktionalität ausgestatteten Datenträger wie einen Massenspeicher an ein externes Endgerät anzubinden. Hierfür sind bei typischen Endgeräte-Betriebssystemen weder Installationsvorgänge noch Administratorrechte erforderlich. Internet-Anfragen und -Antworten werden in geeigneter Weise in Befehle und Antworten eines Massenspeicher-Zugriffsprotokolls eingebettet und so über eine Massenspeicher-Schnittstelle zwischen dem Datenträger und dem Endgerät übertragen.

Gemäß einem Aspekt der Erfindung weist der Datenträger ein Smartcard-Modul und eine Steuereinheit auf, wobei letztere zur Umsetzung zwischen Befehlen und Antworten gemäß dem Massenspeicher-Zugriffsprotokoll und Befehlen und Antworten gemäß einem von dem Smartcard-Modul verwendeten Protokoll dient. In manchen Ausführungsformen erkennt die Steuereinheit an dem Vorhandensein eines speziellen Bezeichners in einem eingehenden Befehl des Massenspeicher-Zugriffsprotokolls, dass der Befehl Informationen für das Smartcard-Modul enthält.

Das Massenspeicher-Zugriffsprotokoll kann in manchen Ausgestaltungen Schreibbefehle und Lesebefehle aufweisen. Es kann vorgesehen sein, Informationen im Zusammenhang mit der Internet-Funktionalität des Datenträgers in Richtung vom Endgerät zum Datenträger primär durch Schreibbefehle zu übertragen und in Richtung vom Datenträger zum Endgerät primär durch Antworten auf Lesebefehle zu übertragen.

Der Datenträger enthält in manchen Ausführungsformen Programmcode, der in dem Endgerät ein Umsetzmodul zur Umsetzung zwischen Befehlen und Antworten gemäß einem Internet-Protokoll und Befehlen und Antworten gemäß dem Massenspeicher-Zugriffsprotokoll implementiert. Dieser Programmcode kann beispielsweise durch einen an sich bekannten Autostart-Mechanismus in das Endgerät geladen und ausgeführt werden, wenn der Datenträger an das Endgerät angeschlossen wird. In manchen Ausgestaltungen sendet das Umsetzmodul während seines Betriebs im Endgerät fortlaufend Lesebefehle an den Datenträger, um dem Datenträger mit jeder Antwort auf einen solchen Lesebefehl Gelegenheit zur Übermittlung von Informationen - insbesondere von Internet-Anfragen - an das Endgerät zu geben.

Allgemein sollen im vorliegenden Dokument als "Internet-Protokolle" sowohl Protokolle der Anwendungsschicht - z.B. HTTP oder HTTPS - als auch Protokolle der Transportschicht - z.B. TCP oder UDP - als auch Protokolle der Internet-Schicht - z.B. IP - verstanden werden. Entsprechend ist eine Internet-Anfrage eine Anfrage oder ein Befehl gemäß einem dieser Protokolle, und eine Internet-Antwort ist eine Antwort gemäß einem dieser Protokolle.

Gemäß weiteren Aspekten der Erfindung ist vorgesehen, dass ein in den Datenträger integrierter Internet-Server Anfragen gemäß einem Internet-Protokoll beantwortet, und/oder dass ein in den Datenträger integrierter Internet-Client derartige Anfragen ausgibt. Diese Anfragen werden in geeigneter Weise in Befehle und/oder Antworten gemäß einem Massenspeicher-Zugriffsprotokoll eingebettet.

Weitere Merkmale, Vorteile und Aufgaben der Erfindung gehen aus der folgenden genauen Beschreibung mehrerer Ausführungsbeispiele hervor. Es wird auf die schematischen Zeichnungen verwiesen, in denen zeigen:
Fig.1 ein Blockdiagramm eines Systems nach einem Ausführungsbeispiel der Erfindung,
Fig. 2 einen Abschnitt eines beispielhaften Ablaufs des Systems von Fig.1 nach dem Verbinden eines Datenträgers mit einem Endgerät,
Fig. 3 einen weiteren Abschnitt des beispielhaften Ablaufs, bei dem ein Smartcard-Modul die Funktion eines Internet-Servers ausführt, und
Fig. 4 und Fig. 5 einen weiteren Abschnitt des beispielhaften Ablaufs, bei dem das Smartcard-Modul die Funktion eines Internet-Clients ausführt.

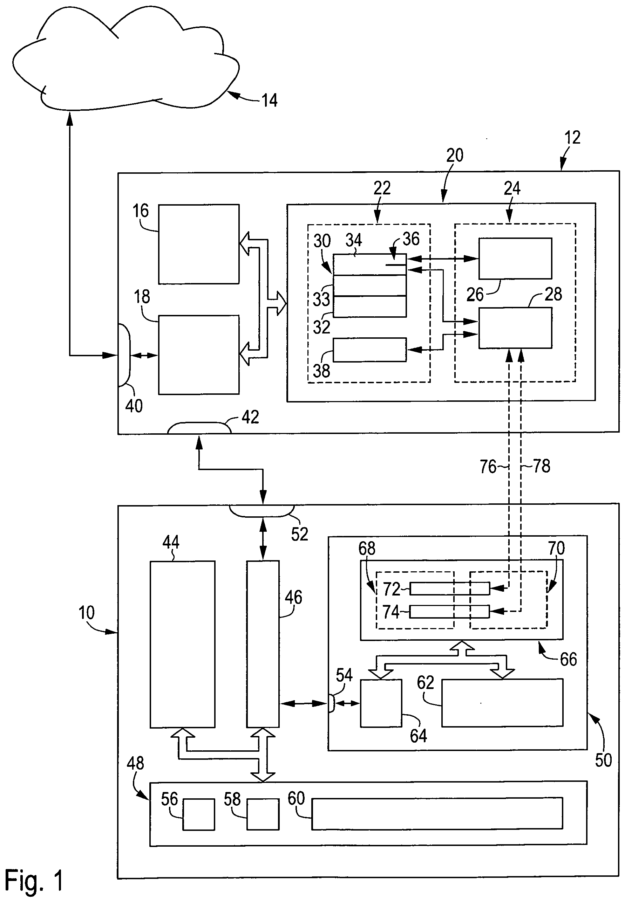

Fig. 1 zeigt einen Datenträger 10 und ein Endgerät 12, das seinerseits mit einem Netzwerk 14 verbunden ist. Das Netzwerk 14 kann das Internet oder ein Intranet oder ein anderes lokales oder nicht-lokales Netzwerk sein, in dem mindestens ein Internet-Protokoll eingesetzt wird. Der Datenträger 10 ist eine kompakte, tragbare, zum jederzeitigen Mitführen durch einen Nutzer geeignete Einheit, die beispielsweise als Chipkarte oder als Chipmodul ausgestaltet sein kann. In unterschiedlichen Ausgestaltungen kann der Datenträger 10 z.B. die Bauform eines USB-Speichermoduls oder einer Speicherkarte des SD-Typs (*Secure Digital,* einschließlich Abwandlungen wie SDHC, miniSD, microSD und so weiter) oder einer Speicherkarte des MMC Typs (*MultiMedia Card,* einschließlich Abwandlungen wie RS-MMC, MMC*plus,* MMC*mobile* und so weiter) oder einer Chipkarte gemäß den Teilen 1 und 2 von ISO/IEC-7816 aufweisen.

Als Endgerät 12 kann allgemein jedes stationäre oder tragbare Gerät verwendet werden, das einen Internet-Protokollstapel und eine geeignete Massenspeicher-Schnittstelle aufweist. Beispielsweise kann das Endgerät 12 ein üblicher persönlicher Computer (PC) in stationärer oder tragbarer Bauform oder ein mobiles Kommunikationsgerät oder ein tragbares oder stationäres Medienabspielgerät (z.B. ein MP3-Spieler oder eine Set-Top-Box oder ein Mediencenter) oder eine tragbare oder stationäre Spielkonsole sein. Derartige Geräte sind als solche gut bekannt. In vielen Ausführungsformen der Erfindung ist vorgesehen, als Endgerät 12 ein handelsübliches Gerät ohne Modifikation - abgesehen davon, dass bestimmte Software auf die hierzu vorgesehene Weise in das Endgerät 12 eingespielt wird - zu verwenden.

Je nach dem vorgesehenen Einsatzzweck ist eine tatsächliche Verbindung des Endgeräts 12 mit dem Netzwerk 14 nicht notwendigerweise erforderlich, weil die Erfindung auch genutzt werden kann, um eine Kommunikation zwischen einem lokal auf dem Endgerät 12 ausgeführten Anwendungsprogramm und einem Smartcard-Modul des Datenträgers 10 über ein Internet-Protokoll zu ermöglichen.

Von den diversen Komponenten des Endgeräts 12 sind in Fig. 1 nur diejenigen gezeigt, die zum Verständnis der Erfindung bedeutsam sind. Dies sind insbesondere ein Prozessor 16, eine Schnittstellenbaugruppe 18 und ein Speicher 20, der ein Betriebssystem 22 und diverse Anwendungsprogramme 24 enthält. In den hier beschriebenen Ausführungsbeispielen ist das Betriebssystem 22 eines, wie es für Endgeräte 12 des jeweiligen Typs üblicherweise eingesetzt wird. Wenn beispielsweise das Endgerät 12 ein PC ist, so kann das Betriebssystem eines der unter den Marken Microsoft Windows oder Apple MacOS oder Linux bekannten Systeme sein. Als Anwendungsprogramme 24 sind in Fig. 1 ein üblicher Internet-Browser 26 - z.B. einer der unter den Marken Microsoft Internet Explorer oder Mozilla Firefox oder Google Chrome bekannten Browser - sowie ein Anbindemodul 28 gezeigt, dessen Funktion später erläutert wird.

Als eine von vielen Komponenten stellt das Betriebssystem 22 einen Internet-Protokollstapel 30 bereit, der in Fig. 1 schematisch mit einer Netzzugangsschicht 32, einer Internet-Schicht 33 und einer Transportschicht 34 gezeigt ist. Als Protokolle können beispielsweise IP (*Internet Protocol*) für die Internet-Schicht 33 und TCP (*Transmission Control Protocol*) für die Transportschicht 34 verwendet werden. Der Zugriff von Anwendungsprogrammen 24 auf den Internet-Protokollstapel 30 erfolgt über eine als *Sockets* ("Buchse" oder "Dose") bekannte Schnittstelle 36. Ferner stellt das Betriebsystem einen Speichertreiber 38 bereit, über den das Anbindemodul 28 Lese- und Schreibbefehle an den Datenträger 10 richten und Antworten empfangen kann.

Die Schnittstellenbaugruppe 18 implementiert unter anderem eine Netzwerkschnittstelle 40 zur Anbindung des Endgeräts 12 an das Netzwerk 14 und eine Massenspeicher-Schnittstelle 42 zum Anschluss des Datenträgers 10. Je nach der Art des Datenträgers 10 ist die Massenspeicher-Schnittstelle 42 z.B. eine USB-Schnittstelle oder eine Schnittstelle für Speicherkarten des SD- oder MMC-Typs oder eine andere geeignete Schnittstelle. Wie unten noch genauer beschrieben wird, kommuniziert das Endgerät 12 mit dem Datenträger 10 über ein Massenspeicher-Zugriffsprotokoll, das dem Typ des Datenträgers 10 entspricht.

Der Datenträger 10 weist eine Steuereinheit 44, ein Schnittstellenmodul 46, einen Speicher 48 und ein Smartcard-Modul 50 auf. Das Schnittstellenmodul 46 stellt eine externe Schnittstelle 52 zur Kommunikation mit dem Endgerät 12 bereit und ist ferner mit einer internen Schnittstelle 54 des Smartcard-Moduls 50 verbunden. In dem Speicher 48 befindet sich ein Steuerprogramm 56 für die Steuereinheit 44 sowie eine Datei mit Programmcode 58, der, wenn er in das Endgerät 12 übertragen und dort ausgeführt wird, das Anbindemodul 28 implementiert.

Bei dem in Fig. 1 gezeigten Ausführungsbeispiel ist der Speicher 48 als beschreibbarer Massenspeicher - z.B. in Flash-Technologie - ausgebildet und weist einen frei nutzbaren Massenspeicherbereich 60 relativ hoher Kapazität - z.B. mehrere Gigabyte - auf. Der Datenträger 12 kann somit auch als tragbarer Massenspeicher in der Art eines üblichen USB-Stick oder einer üblichen Speicherkarte dienen. In Ausführungsalternativen ist diese Funktion jedoch nicht vorgesehen. Der Speicher 48 ist dann entsprechend kleiner dimensioniert und enthält im wesentlichen nur das Steuerprogramm 56 sowie den Programmcode 58, aber keinen frei nutzbaren Massenspeicherbereich 60.

Das Smartcard-Modul 50 weist einen Smartcard-Prozessor 62, eine Schnittstellenschaltung 64 und einen Speicher 66 auf. Die Schnittstellenschaltung 64 stellt die interne Schnittstelle 54 des Smartcard-Moduls 50 bereit. Der Datenaustausch über diese interne Schnittstelle 54 erfolgt über ein für das Smart-card-Modul 50 vorgesehenes Protokoll. Diese ist im vorliegenden Ausführungsbeispiel ein Protokoll gemäß ISO/IEC-7816, während in Ausführungsalternativen andere Protokolle verwendet werden können. Es sind auch Ausgestaltungen vorgesehen, bei denen das Smartcard-Modul 50 mit der Steuereinheit 44 unmittelbar über ein Internet-Protokoll - z.B. TCP/IP oder HTTP - kommuniziert.

Der Speicher 66 weist mehrere in unterschiedlichen Technologien ausgestaltete Speicherfelder auf, in denen ein Betriebsystem 68 und ein oder mehrere Anwendungsprogramme 70 enthalten sind. Insbesondere bilden die diversen Programmkomponenten im Speicher 66 einen Internet-Server 72 und einen Internet-Client 74. In unterschiedlichen Ausführungsformen können der Internet-Server 72 und der Internet-Client 74 entweder Teil des Betriebssystems 68 oder der Anwendungsprogramme 70 sein. In vielen Ausgestaltungen sind jedoch, wie dies auch in Fig.1 gezeigt ist, manche Komponenten des Internet-Servers 72 und des Internet-Clients 74 Teile des Betriebssystems 68 und andere Komponenten Teile der Anwendungsprogramme 70.

Im Betrieb des in Fig. 1 gezeigten Systems ist ein erster virtueller Kommunikationskanal 76 zwischen dem Internet-Server 72 und dem Anbindemodul 28 aufgebaut, und ein zweiter virtueller Kommunikationskanal 78 ist zwischen dem Internet-Client 74 und dem Anbindemodul 28 aufgebaut. Die beiden virtuellen Kommunikationskanäle 72, 74, die auch als "*Pipes*" bezeichnet werden, verlaufen physisch über die interne Schnittstelle 54, die externe Schnittstelle 52 und die Datenträgerschnittstelle 42. Logisch werden die virtuellen Kommunikationskanäle 72, 74 dadurch gebildet, dass Dateneinheiten eines Internet-Protokolls - beispielsweise HTTP-Anfragen und HTTP-Antworten - in Befehle und Antworten eines Massenspeicher-Zugriffsprotokolls sowie gegebenenfalls eines von dem Smartcard-Modul 50 verwendeten Protokolls eingebettet werden.

Genauer gesagt, werden die Dateneinheiten des Internet-Protokolls auf der Strecke zwischen dem Endgerät 12 und dem Datenträger 10 in Form von Befehlen und Antworten des Massenspeicher-Zugriffsprotokolls übermittelt. Die Befehle des Massenspeicher-Zugriffsprotokolls mit eingebetteten Internet-Dateneinheiten sind von "normalen" Massenspeicherbefehlen dadurch unterschieden, dass nur erstere eine Leitinformation mit einem speziellen Bezeichner enthalten, der von der Steuereinheit 44 des Datenträgers 10 erkannt wird. Die Steuereinheit 44 extrahiert aus diesen Befehlen die Dateneinheiten des Internet-Protokolls und erzeugt daraus Befehle gemäß dem von dem Smartcard-Modul 50 verwendeten Protokoll, beispielsweise einem Protokoll gemäß dem ISO/IEC-7816-Standard. Entsprechend nimmt die Steuereinheit 44 Dateneinheiten des Smartcard-Moduls 50 entgegen und erzeugt daraus Antworten gemäß dem Massenspeicher-Zugriffsprotokoll, wobei die Übertragung der letztgenannten Antworten zum Endgerät 12 gegebenenfalls seitens des Endgeräts 12 durch weitere Befehle des Massenspeicher-Zugriffsprotokolls angestoßen werden muss.

Die Einbettung von Smartcard-Befehlen und -Antworten in ein Massenspeicher-Zugriffsprotokoll unter Verwendung einer Leitinformation ist bereits aus der eingangs gewürdigten Offenlegungsschrift WO 2008/058741 A2 bekannt. Der Inhalt dieser Offenlegungsschrift wird hiermit durch Bezugnahme in das vorliegende Dokument aufgenommen. In vielen Ausführungsbeispielen der vorliegenden Erfindung werden die aus der Offenlegungsschrift bekannten Techniken zur Implementierung der beiden virtuellen Kommunikationskanäle 76, 78 herangezogen, wobei jedoch bei der vorliegenden Erfindung - im Gegensatz zu dem bekannten System - letztendlich Dateneinheiten eines Internet-Protokolls in die Befehle und Antworten gemäß dem Massenspeicher-Zugriffsprotokoll eingebettet werden.

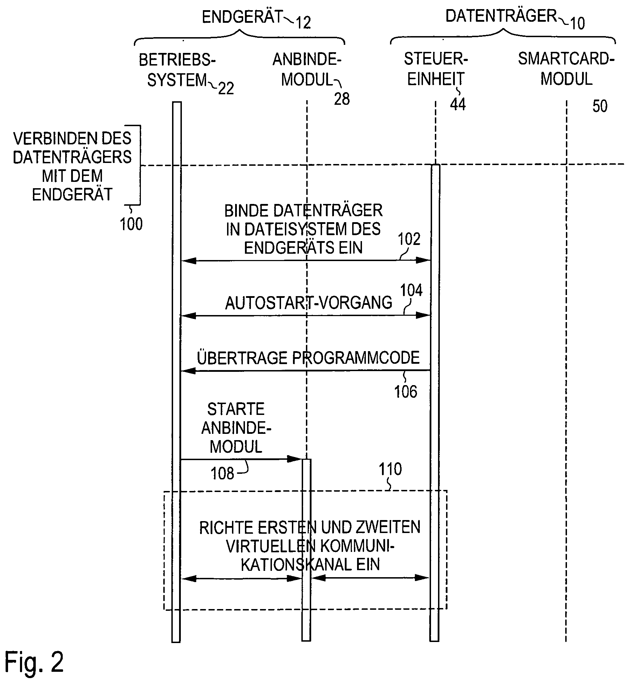

Fig. 2 bis Fig. 5 zeigen einen beispielhaften Verfahrensablauf, bei dem das Smartcard-Modul 50 zunächst als Internet-Server und dann als Internet-Client arbeitet. Im vorliegenden Ausführungsbeispiel dient HTTP oder HTTPS (eine mittels SSL/TLS verschlüsselte Variante von HTTP) als Protokoll der Anwendungsschicht, so dass das Smartcard-Modul 50 ungefähr die Funktionen eines Web-Server und eines Web-Client übernimmt. In Ausführungsalternativen können jedoch auch andere Internet-Protokolle verwendet werden, die z.B. Protokolle der Anwendungsschicht oder der Transportschicht sein können.

Der in Fig. 2 gezeigte Ablauf beginnt in Schritt 100 damit, dass der Datenträger 10 über die Schnittstellen 42 und 52 mit dem Endgerät 12 verbunden wird. Wenn der Datenträger 10 beispielsweise ein USB-Stick ist, so wird er in Schritt 100 in eine USB-Buchse des Endgeräts 12 eingesteckt. Das Betriebssystem 22 des Endgeräts 12 erkennt den Datenträger 10 als Massenspeicher und bindet ihn in Schritt 102 auf an sich bekannte Weise in ein Dateisystem des Endgeräts 12 ein. Hierzu sind keine Administratorrechte oder sonstige Privilegien auf dem Endgerät 12 erforderlich.

Ferner startet das Betriebssystem 22 in Schritt 104 einen an sich bekannten Autostart-Vorgang, bei dem eine vorbestimmte Datei auf dem Datenträger 10 identifiziert wird. Je nach der Art des verwendeten Betriebssystems 22 kann hierzu beispielsweise eine Datei mit einem bestimmten Dateinamen oder mit einem bestimmten Dateiattribut gesucht werden. Im vorliegenden Beispiel ist die Datei mit dem Programmcode 58 als Autostartdatei ausgezeichnet. Das Betriebssystem 22 liest diese Datei in Schritt 106 aus dem Speicher 48 des Datenträgers 10 aus und startet sie in Schritt 108 als ausführbares Programm, nämlich als Anbindemodul 28. Auch dieser Vorgang erfordert keine Administratorrechte. Das Anbindemodul 28 benötigt keine unmittelbare Interaktion mit dem Benutzer des Endgeräts 12. Daher kann das Anbindemodul 28 von dem Endgerät 12 als Hintergrundprozess ausgeführt werden und bleibt für den Benutzer im normalen Betrieb völlig unsichtbar.

Im folgenden Schritt 110 richtet das Anbindemodul 28 den ersten und den zweiten virtuellen Kommunikationskanal 76, 78 ein. Hierzu kann in einem Ausführungsbeispiel vorgesehen sein, dass das Anbindemodul 28 zunächst das Betriebssystem 22 anweist, eine Datei in einem dem Datenträger 10 zugeordneten Dateisystem anzulegen. Das Betriebssystem 22 erzeugt hierauf eine Dateikennung und ordnet diese einer gültigen Adresse im Speicher 48 des Datenträgers 10 zu. Dies ermöglicht es dem Anbindemodul 28, zur Kommunikation mit dem Datenträger 10 dateibasierte Befehle zu verwenden, die von dem Speichertreiber 38 des Betriebssystem 22 bereitgestellt werden. Diese Befehle enthalten die Dateikennung und werden von dem Speichertreiber 38 und gegebenenfalls weiteren Komponenten des Betriebssystems 22 in Befehle des Massenspeicher-Zugriffsprotokolls umgesetzt, in denen die Dateikennung in die entsprechende Adresse im Speicher 48 umgesetzt ist.

Ferner wird in Schritt 110 mindestens ein Bezeichner festgelegt, der dem Anbindemodul 28 und der Steuereinheit 44 des Datenträgers 10 bekannt ist. Wenn dieser Bezeichner in einem Schreib- oder Lesebefehl des Massenspeicher-Zugriffsprotokolls enthalten ist, signalisiert dies der Steuereinheit 44, dass der Befehl an das Smartcard-Modul 50 - und nicht etwa an den Speicherbereich 60 - gerichtet ist. Der Bezeichner kann beispielsweise zwischen dem Datenträger 10 und dem Anbindemodul 28 in einem Kommunikationsvorgang ausgehandelt werden, oder er kann in dem Programmcode 58 enthalten und somit vorgegeben sein. In unterschiedlichen Ausführungsformen wird entweder ein einziger Bezeichner oder je ein Bezeichner für jeden der beiden virtuellen Kommunikationskanäle 76, 78 verwendet.

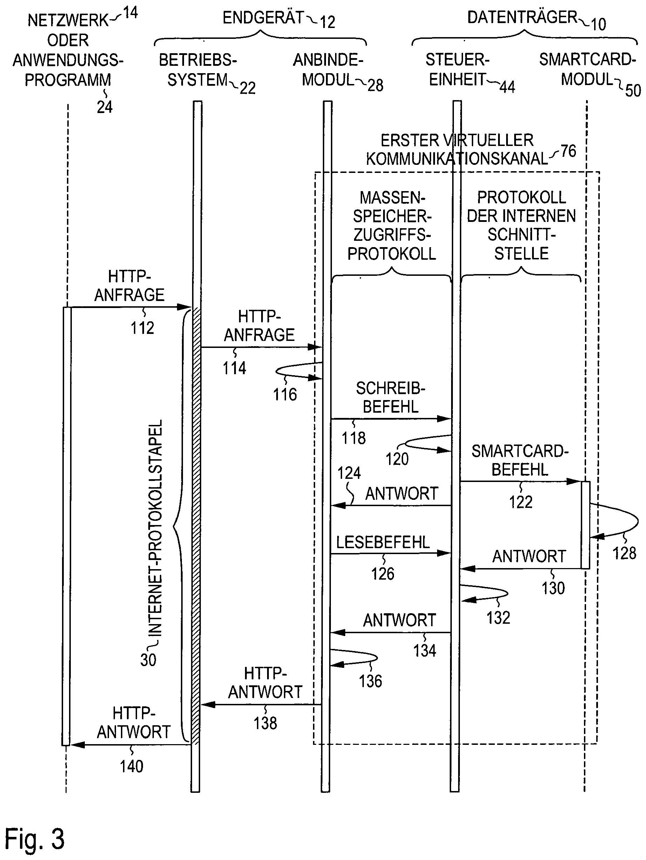

Die Verfahrensschritte in Fig. 3 zeigen Kommunikations- und Verarbeitungsvorgänge, bei denen das Smartcard-Modul 50 die Funktion eines Internet-Servers ausübt. Genauer beantwortet das Smartcard-Modul 50 im vorliegenden Ausführungsbeispiel eine HTTP-Anfrage, die in Schritt 112 bei dem Internet-Protokollstapel 30 des Endgeräts 12 eingeht. Die HTTP-Anfrage kann entweder aus dem Netzwerk 14 oder von einem lokalen Anwendungsprogramm 24 - beispielsweise dem Internet-Browser 26 - stammen.

In den hier beschriebenen Ausführungsbeispielen wird das Smartcard-Modul 50 über die gleiche IP-Nummer bzw. den gleichen Hostnamen wie das Endgerät 12 angesprochen und über eine bestimmte Portnummer ausgewählt. Wenn beispielsweise das Endgerät 12 unter dem Hostnamen myhost.gi-de.com erreichbar ist und das Smartcard-Modul 50 der Portnummer 8080 zugeordnet ist, so kann eine externe HTTP-Anfrage in Schritt 112 an die URI http://myhost.gi-de.com:8080 gerichtet sein. Eine lokale HTTP-Anfrage des Internet-Browsers 26 kann dagegen an die IP-Nummer des Endgeräts 12 oder an den Hostnamen "localhost" gerichtet sein.

Der Internet-Protokollstapel 30 leitet die HTTP-Anfrage in Schritt 114 über die "*Sockets* "-Schnittstelle 36 an das Anbindemodul 28 weiter. In den folgenden Schritten 116-122 wird die Anfrage über den ersten virtuellen Kommunikationskanal 76 an den Internet-Server 72 des Smartcard-Moduls 50 übersandt. Zunächst bettet in Schritt 116 das Anbindemodul 28 - in Zusammenwirken mit dem Speichertreiber 38 sowie gegebenenfalls weiteren Komponenten des Betriebssystems 22 - die HTTP-Anfrage in einen Schreibbefehl des Massenspeicher-Zugriffsprotokolls ein. Wie bereits oben in Zusammenhang mit Schritt 110 erläutert wurde, erzeugt das Anbindemodul 28 diesen Schreibbefehl als dateibasierten Befehl gemäß einer von dem Speichertreiber 38 bereitgestellten Programmschnittstelle, und der Speichertreiber 38 setzt diesen dateibasierten Befehl in einen Schreibbefehl des Massenspeicher-Zugriffsprotokolls um. Hierbei verwendet das Anbindemodul 28 die in Schritt 110 bestimmte Dateikennung, die von dem Speichertreiber 38 in die entsprechende Zieladresse im Speicher 48 umgewandelt wird.

Das Anbindemodul 28 fügt eine Leitinformation und die HTTP-Anfrage in den Datenteil des Schreibbefehls ein. Die Leitinformation enthält insbesondere den in Schritt 110 festgelegten Bezeichner, der den Schreibbefehl gegenüber der Steuereinheit 44 als an das Smartcard-Modul 50 gerichteten Befehl ausweist. Ferner kann die Leitinformation weitere Daten enthalten, beispielsweise eine Kennung der Art der eingebetteten Anfrage und/oder eine Kennung des virtuellen Kommunikationskanals. Alternativ oder zusätzlich können die beiden virtuellen Kommunikationskanäle 76, 78 - und gegebenenfalls weitere Kommunikationskanäle - durch unterschiedliche Bezeichner unterschieden werden.

Der in Schritt 116 erzeugte Schreibbefehl wird in Schritt 118 über die Schnittstellen 42 und 52 an den Datenträger 10 übertragen. Dort wird der Schreibbefehl in Schritt 120 von der Steuereinheit 44 auf das Vorhandensein des festgelegten Bezeichners untersucht. Wenn kein solcher Bezeichner vorhanden wäre, so würde die Steuereinheit 44 den Schreibbefehl als "gewöhnlichen" Schreibbefehl behandeln und in einen Schreibzugriff auf den Massenspeicherbereich 60 umsetzen. Im vorliegenden Beispielsablauf erkennt jedoch die Steuereinheit 44 den Bezeichner und schließt daraus, sowie gegebenenfalls aus weiteren in der Leitinformation enthaltenen Daten, dass in den Schreibbefehl eine Anfrage an das Smartcard-Modul 50 eingebettet ist. Die Steuereinheit 44 extrahiert daraufhin diese Anfrage und sendet sie in Schritt 122 in Form eines Befehls gemäß dem von dem Smartcard-Modul 50 verwendeten Protokoll über die interne Schnittstelle 54 an das Smartcard-Modul 50.

Im vorliegenden Ausführungsbeispiel verarbeitet das Smartcard-Modul 50 Befehle nach dem ISO/IEC-7816-Protokoll. Demgemäß setzt die Steuereinheit 44 in Schritt 120 den über die externe Schnittstelle 52 eingehenden Schreibbefehl in mindestens einen Befehl gemäß diesem Protokoll um. Der Smartcard-Prozessor 62 extrahiert dann aus den eingehenden Smartcard-Befehlen die Internet-Anfragen (z.B. HTTP-Anfragen), die vom Internet-Server 72 verarbeitet werden sollen. Es sind jedoch auch Ausgestaltungen vorgesehen, bei denen das Smartcard-Modul 50 ein anderes Protokoll verwendet. Dies kann insbesondere unmittelbar ein Internet-Protokoll wie z.B. TCP/IP oder HTTP oder HTTPS sein. Die Verwendung von Befehlen nach dem ISO/IEC-7816-Protokoll und die damit einhergehenden Einbettungs- und Extraktionsschritte durch den Smartcard-Prozessor 62 können dann entfallen.

In anderen Ausführungsformen kann vorgesehen sein, dass das Anbindemodul 28 die Einbettung der Dateneinheiten nach dem Internet-Protokoll in das vom Smartcard-Modul 50 verwendete Protokoll bereits ganz oder teilweise übernimmt. In diesen Ausführungsformen kann das Anbindemodul 28 beispielsweise eine HTTP-Anfrage zunächst in mindestens eine Anfrage nach dem ISO/ IEC-7816-Protokoll einbetten und diese mindestens eine Anfrage dann in Form von Daten mindestens eines Schreibbefehls nach dem Massenspeicher-Zugriffsprotokoll an den Datenträger 10 senden. Die Steuereinheit 44 braucht dann entsprechend weniger Umsetzaufgaben auszuführen.

In Schritt 124 beantwortet die Steuereinheit 44 den in Schritt 118 empfangenen Schreibbefehl in der gemäß dem Massenspeicher-Zugriffsprotokoll vorgesehenen Weise. Der Schritt 124 ist dann erforderlich, wenn das Massenspeicher-Zugriffsprotokoll zwar eine Rückmeldung auf den Schreibbefehl vorsieht, aber diese Rückmeldung nicht genügend Informationen übermitteln kann, um darin schon die Antwort des Internet-Servers 72 einzubetten. In diesem Fall, der im vorliegenden Ausführungsbeispiel angenommen wird, sendet das Anbindemodul 28 in Schritt 126 - wiederum in Zusammenwirken mit dem Speichertreiber 38 - einen Lesebefehl an den Datenträger 10. Dieser Lesebefehl enthält ebenfalls eine Leitinformation mit dem festgelegten Bezeichner, wodurch der Lesebefehl von der Steuereinheit 44 als nicht an den Massenspeicherbereich 60 gerichteter Befehl erkannt wird. Der Lesebefehl selbst enthält keine für das Smartcard-Modul 50 wesentlichen Informationen, sondern er gibt der Steuereinheit 44 lediglich Gelegenheit, in einer Antwort umfangreiche Daten an das Endgerät 12 zu übermitteln.

In Ausführungsvarianten, bei denen das Massenspeicher-Zugriffsprotokoll bereits die Übermittlung hinreichend vieler Daten in der Antwort auf den in Schritt 118 gesendeten Schreibbefehl zulässt, können die Schritte 124 und 126 entfallen.

Parallel zu den gerade beschriebenen Vorgängen verarbeitet der von dem Smartcard-Prozessor 62 ausgeführte Internet-Server 72 in Schritt 128 die eingegangene Anfrage. Das Smartcard-Modul 50 übermittelt die Antwort des Internet-Servers 72 in Schritt 130 über die interne Schnittstelle 54 an die Steuereinheit 44. Diese Antwort wird dabei durch den Smartcard-Prozessor 62 in eine oder mehrere Dateneinheiten gemäß dem von der internen Schnittstelle 54 verwendeten Protokoll - im vorliegenden Ausführungsbeispiel dem ISO/IEC-7816-Protokoll - eingebettet. Es versteht sich, dass Schritt 130 je nach der Antwortzeit des Internet-Servers 72 vor oder nach oder zwischen den Schritten 124 und 126 ausgeführt werden kann.

In Schritt 132 extrahiert die Steuereinheit 44 die Antwortdaten - z.B. Daten einer HTTP-Antwort - aus der mindestens einen von dem Smartcard-Modul 50 erhaltenen Dateneinheit. Ferner bettet die Steuereinheit 44 diese Daten in eine Antwort auf den in Schritt 126 erhaltenen Lesebefehl gemäß dem Massenspeicher-Zugriffsprotokoll ein. Beispielsweise können die HTTP-Antwortdaten als "gelesene Daten" in der Antwort auf den Lesebefehl übertragen werden, so als ob diese Daten in einem Massenspeicher des Datenträgers 10 enthalten wären.

Der Datenträger 10 übermittelt in Schritt 134 die Antwort auf den Lesebefehl an das Anbindemodul 28. Hierbei ist wiederum der Speichertreiber 38 zwischengeschaltet, der die gelesenen Daten unverändert an das Anbindemodul 28 weiterreicht. In Schritt 136 erzeugt das Anbindemodul eine HTTP-Antwort aus den erhaltenen Daten. Je nach der Art der Datencodierung bei der Übertragung auf dem ersten virtuellen Kommunikationskanal 76 sind hierzu in vielen Ausführungsbeispielen keine oder nur geringfügige Verarbeitungsschritte erforderlich, so dass Schritt 136 gegebenenfalls entfallen kann.

Die HTTP-Antwort wird in Schritt 138 von dem Anbindemodul 28 an den Internet-Protokollstapel 30 des Betriebssystems 22 übergeben und von dort in Schritt 140 an den internen oder externen Client - z.B. den Internet-Browser 26 oder einen über das Netzwerk 14 ansprechbaren Rechner - weitergereicht. Der gerade beschriebene Ablauf gemäß Fig. 3 kann beliebig oft wiederholt werden.

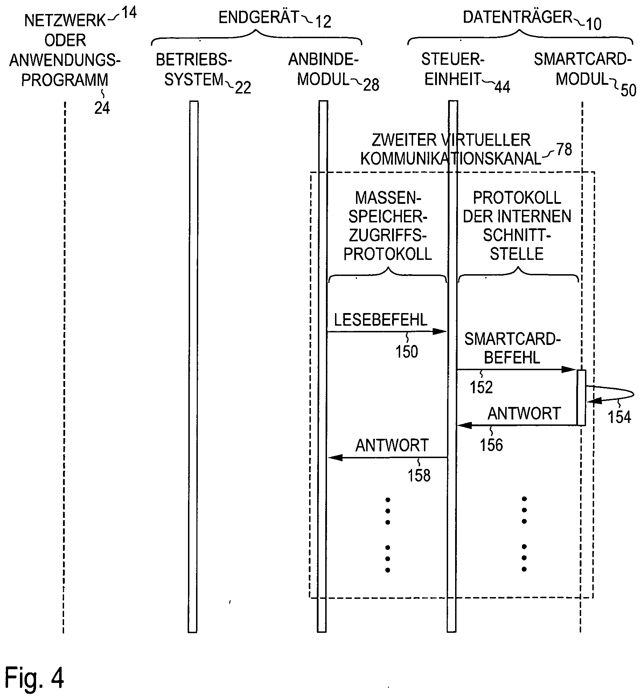

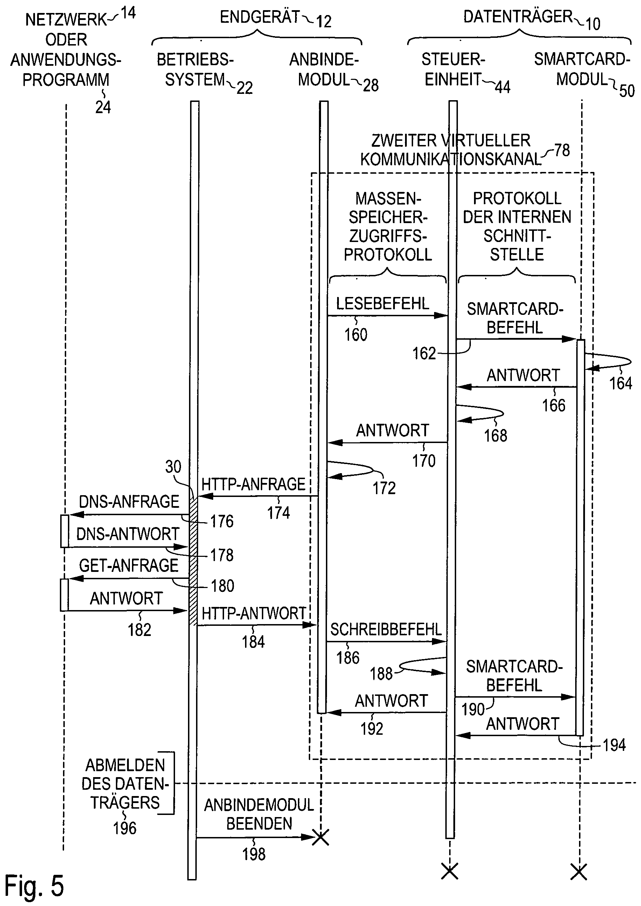

Fig. 4 und Fig. 5 zeigen einen Ausschnitt aus dem beispielhaften Verfahrensablauf, bei dem das Smartcard-Modul 50 des Datenträgers 10 die Funktion eines Internet-Clients ausführt, also von sich aus eine Anfrage über ein Internet-Protokoll initiiert. Da der Datenträger 10 gegenüber dem Endgerät 12 als Massenspeicher angemeldet ist, kann er nur auf Massenspeicher-Zugriffsbefehle antworten, jedoch nicht selbst solche Befehle absetzen. Es ist daher in den hier beschriebenen Ausführungsbeispielen vorgesehen, dass das Anbindemodul 28 in gewissen Abständen bei dem Datenträger 10 nachfragt, ob eine Anfrage des Internet-Clients 74 vorliegt. Diese Nachfragen des Anbindemoduls 28 werden über den zweiten virtuellen Kommunikationskanal 78 übertragen. Sie können somit nebenläufig zum Datenaustausch über den ersten virtuellen Kommunikationskanal 76 erfolgen, so dass sich die Funktionen des Smartcard-Moduls 50 als Internet-Server 72 und als Internet-Client 74 gegenseitig nicht behindern.

Der in Fig. 4 und Fig. 5 gezeigte Ablauf beginnt in den Schritten 150-158 (Fig. 4) mit einer Nachfrage der gerade beschriebenen Art. Das Anbindemodul 28 übermittelt hierzu in Schritt 150 einen Lesebefehl gemäß dem Massenspeicher-Zugriffsprotokoll an den Datenträger 10. Die Steuereinheit 44 setzt diesen Lesebefehl auf die bereits beschriebene Art in einen Befehl gemäß dem von der internen Schnittstelle 54 verwendeten Protokoll - z.B. dem ISO/IEC-7816-Protokoll - um und sendet diesen Befehl in Schritt 152 an das Smartcard-Modul 50. Der Internet-Client 74 des Smartcard-Moduls 50 bestimmt in Schritt 154, dass keine Internet-Anfrage abgegeben werden soll. Dieses negative Ergebnis wird vom Smartcard-Modul 50 in Schritt 156 an die Steuereinheit 44 übermittelt, die in Schritt 158 eine entsprechende Rückmeldung an das Anbindemodul 44 ausgibt.

Die gerade beschriebenen Schritte 150-158 (Fig. 4) werden in regelmäßigen oder unregelmäßigen Abständen wiederholt, wobei jeweils das Anbindemodul 28 den Nachfragevorgang anstößt. Auch der in Fig. 5 gezeigte Teil des Beispielablaufs beginnt mit einer durch das Anbindemodul 28 ausgelösten Nachfrage, die in Form eines Lesebefehls an die Steuereinheit 44 und von dort an das Smartcard-Modul 50 übermittelt wird. Die Schritte 160 und 162 in Fig. 5 sind somit identisch zu den Schritten 150 und 152 in Fig. 4. In dem in Fig. 5 gezeigten Ablauf bestimmt jedoch der Internet-Client 74 in Schritt 164, dass ein Zugriff auf einen zum Datenträger 10 externen Internet-Server durchgeführt werden soll. Dieser Internet-Server kann beispielsweise eines der auf dem Endgerät 12 ausgeführten Anwendungsprogramme 24 oder ein Programm sein, das vom Endgerät 12 über das Netzwerk 14 angesprochen wird. Es versteht sich dass der Begriff "Internet-Server" hier nicht auf Web-Server oder ähnliche Programme beschränkt ist, sondern breit als jedes Programm zu verstehen ist, das Internet-Anfragen beantwortet.

Das Smartcard-Modul 50 übermittelt somit in Schritt 166 eine Antwort in Form eines Datenpakets nach dem ISO/IEC-7816-Standard oder einem anderen von der internen Schnittstelle 54 verwendeten Standard. In dieses Datenpaket ist eine Internet-Anfrage eingebettet, die beispielsweise eine HTTP- oder HTTPS-Anfrage sein kann. Insbesondere enthält die Internet-Anfrage eine Zieladresse, beispielsweise in Form einer URI mit einem Hostnamen oder einer IP-Nummer. Es ist ein Merkmal vieler Ausführungsbeispiele der vorliegenden Erfindung, dass der Internet-Client 74 die Zieladresse der Internet-Anfrage selbst bestimmt.

Die Steuereinheit 44 extrahiert in Schritt 168 die Internet-Anfrage und bettet sie in eine Antwort auf den in Schritt 160 erhaltenen Lesebefehl ein. Diese Antwort wird in Schritt 170 an das Anbindemodul 28 übertragen. Das Anbindemodul 28 führt in Schritt 172 gegebenenfalls erforderliche Umsetzvorgänge aus und leitet die Internet-Anfrage, die beispielsweise eine CONNECT- oder GET-Anfrage nach dem HTTP-Protokoll sein kann, in Schritt 174 an den Internet-Protokollstapel 30 (in Fig. 5 durch eine Schraffierung gezeigt) weiter.

In den Schritten 176-182 verarbeitet der Internet-Protokollstapel 30 die Internet-Anfrage auf an sich bekannte Weise. Insbesondere führt der Internet-Protokollstapel 30 eine gegebenenfalls erforderliche DNS-Abfrage durch (Schritte 176 und 178) und kontaktiert den durch die Zieladresse definierten Internet-Server (Schritte 180 und 182).

In Schritt 184 liefert der Internet-Protokollstapel 30 die Antwort des Internet-Servers an das Anbindemodul 28. Das Anbindemodul 28 übermittelt diese Antwort auf die bereits oben in Zusammenhang mit den Schritten 118-124 beschriebene Weise an das Smartcard-Modul 50. Insbesondere wird in Schritt 186 ein Schreibbefehl des Massenspeicher-Zugriffsprotokolls an die Steuereinheit 44 gesendet, dieser in Schritt 188 in mindestens einen Smart-card-Befehl umgesetzt und letzterer in Schritt 190 an das Smartcard-Modul 50 übertragen. Der Smartcard-Prozessor 62 setzt die über die interne Schnittstelle 54 eingehenden Datenpakete in die vom Internet-Client 74 angeforderten Informationen um.

In den Schritten 192 und 194 bestätigen die Steuereinheit 44 bzw. das Smart-card-Modul 50 die erhaltenen Befehle. Damit ist die Bearbeitung einer Internet-Anfrage des Internet-Client 74 abgeschlossen. Solange das Anbindemodul 28 aktiv ist, wird der Ablauf nun wieder mit Anfragen wie in den Schritten 150-158 (Fig. 4) fortgesetzt. Sobald der Internet-Client 74 einen weiteren Internet-Zugriff anfordert, wird dieser gemäß den gerade beschriebenen Schritten 160-194 ausgeführt.

Der in Fig. 5 gezeigte Verfahrensablauf wird damit abgeschlossen, dass der Datenträger 10 in Schritt 196 von dem Betriebssystem 22 des Endgeräts 12 abgemeldet wird. Das Betriebssystem 22 beendet daraufhin in Schritt 198 das Anbindemodul 28 und löscht dieses aus dem Speicher 20. Im Endgerät 12 bleiben somit keine Spuren zurück. Diese Funktionsweise kann mit dem Schlagwort "*no admin - no footprint*" ("keine Administratorrechte - keine Spuren") umschrieben werden. Der Benutzer kann dann den Datenträger 10 von der Massenspeicher-Schnittstelle 42 trennen, wodurch die Stromversorgung des Datenträgers 10 unterbrochen wird.

Es versteht sich, dass die hier beschriebenen Ausführungsformen und Ausführungsvarianten lediglich als Beispiele zu sehen sind. Weitere Abwandlungen und Kombinationen der hier beschriebenen Merkmale sind für den Fachmann unmittelbar ersichtlich.

## Patentansprüche

1. Verfahren zum Bearbeiten von Anfragen durch einen tragbaren Datenträger (10), wobei:
- der Datenträger (10) über eine externe Schnittstelle (52) mit einem externen Endgerät (12) verbunden wird,
- der Datenträger (10) von dem externen Endgerät (12) erkannt wird,
- von dem Datenträger (10) Programmcode (58) an das Endgerät (12) übertragen und von diesem ausgeführt wird,
- die Ausführung das Endgerät (12) dazu veranlaßt, über die Schnittstelle (52) einen ersten virtuellen Kommunikationskanal (76) zu dem Datenträger (10) aufzubauen;
- der Datenträger (10) über den ersten virtuellen Kommunikationskanal (76) einen Schreibbefehl gemäß einem Massenspeicher-Zugriffsprotokoll erhält, in den eine Anfrage gemäß einem Internet-Protokoll eingebettet ist,
- der Datenträger (10) die Anfrage aus dem Schreibbefehl ermittelt und unter Verwendung eines in den Datenträger (10) integrierten Internet-Servers (72) eine Antwort erzeugt, und
- der Datenträger (10) die erzeugte Antwort in Form einer Antwort gemäß dem Massenspeicher-Zugriffsprotokoll über den ersten virtuellen Kommunikationskanal (76) ausgibt.

2. Verfahren nach Anspruch 1, **dadurch gekennzeichnet, dass** die ausgegebene Antwort gemäß dem Massenspeicher-Zugriffsprotokoll eine Antwort auf einen Lesebefehl gemäß dem Massenspeicher-Zugriffsprotokoll ist, der über die externe Schnittstelle (52) bei dem Datenträger (10) eingegangen ist.

3. Verfahren zum Ausgeben von Anfragen durch einen tragbaren Datenträger (10), wobei:
- der Datenträger (10) über eine externe Schnittstelle (52) mit einem externen Endgerät (12) verbunden wird,
- der Datenträger (10) von dem externen Endgerät (12) erkannt wird,
- von dem Datenträger (10) Programmcode, (58) an das Endgerät (12) übertragen und von diesem ausgeführt wird,
- die Ausführung das Endgerät (12) dazu veranlaßt, über die Schnittstelle (52) einen zweiten virtuellen Kommunikationskanal (78) zu dem Datenträger (10) aufzubauen;
- der Datenträger (10) über den zweiten virtuellen Kommunikationskanal (78) einen Lesebefehl gemäß einem Massenspeicher-Zugriffsprotokoll erhält,
- der Datenträger (10) unter Verwendung eines in den Datenträger (10) integrierten Internet-Clients (74) eine Anfrage gemäß einem Internet-Protokoll erzeugt,
- der Datenträger (10) eine Antwort auf den Lesebefehl gemäß dem Massenspeicher-Zugriffsprotokoll erzeugt, wobei die Anfrage gemäß dem Internet-Protokoll in diese erzeugte Antwort eingebettet ist, und
- der Datenträger (10) die erzeugte Antwort gemäß dem Massenspeicher-Zugriffsprotokoll über den zweiten virtuellen Kommunikationskanal (78) ausgibt.

4. Verfahren nach einem der Ansprüche 1 bis 3, **dadurch gekennzeichnet, dass** das Internet-Protokoll eines der Protokolle HTTP oder HTTPS oder TCP/IP ist, und dass das Massenspeicher-Zugriffsprotokoll Befehle aufweist, die zum Lesen von Daten aus einem Speicherbereich eines Massenspeichers und zum Einschreiben von Daten in einen Speicherbereich eines Massenspeichers vorgesehen sind.

5. Tragbarer Datenträger (10) mit einer Steuereinheit (44), einem Speicher (48) und einen Smartcard-Modul (50), wobei der Datenträger dazu eingerichtet ist, ein Verfahren nach einem der Ansprüche 1 bis 3 auszuführen.

6. Tragbarer Datenträger (10) nach Anspruch 5, **dadurch gekennzeichnet, daß** - er eine externe Schnittstelle (52) aufweist, durch die der Datenträger (10) über ein Massenspeicher-Zugriffsprotokoll ansprechbar ist,
- das Smartcard-Modul (50) eine interne Schnittstelle (54) aufweist und dazu eingerichtet ist, eine Funktionalität eines Internet-Servers (72) und/ oder eines Internet-Clients (74) bereitzustellen, und
- die Steuereinheit (44) zur Umsetzung zwischen Befehlen und Antworten gemäß dem Massenspeicher-Zugriffsprotokoll und Befehlen und Antworten gemäß einem von der internen Schnittstelle (54) des Smartcard-Moduls (50) verwendeten Protokoll eingerichtet ist,
- wobei in dem Datenträger (10) Programmcode (58) gespeichert ist, der von einem Endgerät (12) auslesbar und ausführbar ist

7. Datenträger (10) nach Anspruch 6, **dadurch gekennzeichnet, dass** die Steuereinheit (44) dazu eingerichtet ist, anhand des Vorhandenseins eines festgelegten Bezeichners in einem eingehenden Befehl gemäß dem Massenspeicher-Zugriffsprotokoll festzustellen, ob der Befehl eine Anfrage an das Smartcard-Modul (50) enthält.

8. Datenträger (10) nach Anspruch 6 oder Anspruch 7, **dadurch gekennzeichnet, dass** die Steuereinheit (44) dazu eingerichtet ist, aus einem eingehenden Schreibbefehl gemäß dem Massenspeicher-Zugriffsprotokoll einen Befehl gemäß dem von der internen Schnittstelle (54) des Smartcard-Moduls (50) verwendeten Protokoll zu erzeugen, wobei Informationen aus dem eingehenden Schreibbefehl in den erzeugten Befehl übernommen werden.

9. Datenträger (10) nach einem der Ansprüche 6 bis 8, **dadurch gekennzeichnet, dass** die Steuereinheit (44) dazu eingerichtet ist, aus einer Antwort des Smartcard-Moduls (50) eine Antwort auf einen Lesebefehl gemäß dem Massenspeicher-Zugriffsprotokoll zu erzeugen, wobei Informationen aus der Antwort des Smart-card-Moduls (50) in die erzeugte Antwort übernommen werden.

10. Datenträger (10) nach einem der Ansprüche 6 bis 9, **dadurch gekennzeichnet, dass** in die Befehle und Antworten gemäß dem von der internen Schnittstelle (54) des Smartcard-Moduls (50) verwendeten Protokolls Befehle und Antworten gemäß einem Internet-Protokoll eingebettet sind.

11. Datenträger (10) nach Anspruch 10, **dadurch gekennzeichnet, dass** das Internet-Protokoll eines der Protokolle HTTP oder HTTPS oder TCP/IP ist.

12. Datenträger (10) nach einem der Ansprüche 6 bis 11, **dadurch gekennzeichnet, dass** der Datenträger (10) dazu eingerichtet ist, von einem externen Endgerät (12) als Massenspeicher erkannt und angesprochen zu werden.

13. Datenträger (10) nach einem der Ansprüche 6 bis 13, **dadurch gekennzeichnet, dass** der Programmcode (58), wenn er von einem Endgerät (12) ausgeführt wird, auf dem Endgerät (12) ein Anbindemodul (28) implementiert.

14. Datenträger (10) nach Anspruch 13, **dadurch gekennzeichnet, dass** der Datenträger (10) dazu eingerichtet ist, von dem externen Endgerät (12) als Massenspeicher erkannt zu werden, wenn der Datenträger (10) an eine Massenspeicher-Schnittstelle (42) des Endgeräts (12) angeschlossen wird, und dass hierbei der Programmcode (58) in das Endgerät (12) geladen und von dem Endgerät (12) ausgeführt wird.

15. Datenträger (10) nach Anspruch 13 oder Anspruch 14, **dadurch gekennzeichnet, dass** der Programmcode (58) dazu eingerichtet ist, bei Ausführung auf dem externen Endgerät (12) das Endgerät (12) dazu zu veranlassen, wiederholt Lesebefehle gemäß dem Massenspeicher-Zugriffsprotokoll an den Datenträger (10) zu senden, um dem Datenträger (10) Gelegenheit zur Übermittlung von Informationen an das Endgerät (12) zu geben, die in mindestens eine Antwort auf mindestens einen der Lesebefehle eingebettet sind.

16. System, umfassend ein Endgerät (12) und einen daran über eine Massenspeicher-Schnittstelle (42) angeschlossenen Datenträger (10), wobei der Datenträger (10) nach einem der Ansprüche 6 bis 15 ausgestaltet ist, und wobei das Endgerät (12) ein Betriebssystem (22) und ein Anbindemodul (28) aufweist, die dazu eingerichtet sind, eine Umsetzung zwischen Befehlen und Antworten gemäß einem Internet-Protokoll und Befehlen und Antworten gemäß dem Massenspeicher-Zugriffsprotokoll durchzuführen.

## Claims

1. A method for processing requests by a portable data carrier (10), wherein:
- the data carrier (10) is connected to an external terminal (12) via an external interface (52),
- the data carrier (10) is recognized by the external terminal (12),
- program code (58) is transferred by the data carrier (10) to the terminal (12) and executed by the same,
- the execution causes the terminal (12) to set up a first virtual communication channel (76) to the data carrier (10) via the interface (52);
- the data carrier (10) receives a write command according to a mass-memory access protocol via the first virtual communication channel (76), in which write command there is embedded a request according to an Internet protocol,
- the data carrier (10) ascertains the request from the write command and produces a response employing an Internet server (72) integrated in the data carrier (10), and
- the data carrier (10) outputs the produced response in the form of a response according to the mass-memory access protocol via the first virtual communication channel (76).

2. The method according to claim 1, **characterized in that** the output response according to the mass-memory access protocol is a response to a read command according to the mass-memory access protocol received by the data carrier (10) via the external interface (52).

3. A method for outputting requests by a portable data carrier (10), wherein:
- the data carrier (10) is connected to an external terminal (12) via an external interface (52),
- the data carrier (10) is recognized by the external terminal (12),
- program code (58) is transferred by the data carrier (10) to the terminal (12) and executed by the same,
- the execution causes the terminal (12) to set up a second virtual communication channel (78) to the data carrier (10) via the interface (52);
- the data carrier (10) receives a read command according to a mass-memory access protocol via the second virtual communication channel (78),
- the data carrier (10) produces a response according to an Internet protocol employing an Internet client (74) integrated in the data carrier (10),
- the data carrier (10) produces a response to the read command according to the mass-memory access protocol, wherein the request according to the Internet protocol is embedded in said produced response, and
- the data carrier (10) outputs the produced response according to the mass-memory access protocol via the second virtual communication channel (78).

4. The method according to any of the claims 1 to 3, **characterized in that** the Internet protocol is any one of the protocols HTTP or HTTPS or TCP/IP and that the mass-memory access protocol has commands which are provided for reading data from a memory area of a mass memory and for writing data into a memory area of a mass memory.

5. A portable data carrier (10) with a control unit (44), a memory (48) and a smart-card module (50), wherein the data carrier is adapted to execute a method according to any of the claims 1 to 3.

6. The portable data carrier (10) according to claim 5, **characterized in that** it has an external interface (52) via which the data carrier (10) can be addressed using a mass-memory access protocol,
- the smart-card module (50) has an internal interface (54) and is adapted to make available a functionality of an Internet server (72) and/or of an Internet client (74), and
- the control unit (44) is adapted for conversion between commands and responses according to the mass-memory access protocol and commands and responses according to a protocol employed by the internal interface (54) of the smart-card module (50),
- wherein in the data carrier (10) program code (58) is stored which is readable and executable by a terminal (12).

7. The data carrier (10) according to claim 6, **characterized in that** the control unit (44) is adapted to determine by means of the presence of a predetermined identifier in an incoming command according to the mass-memory access protocol whether the command contains a request to the smart-card module (50).

8. The data carrier (10) according to claim 6 or claim 7, **characterized in that** the control unit (44) is adapted to produce from an incoming write command according to the mass-memory access protocol a command according to the protocol employed by the internal interface (54) of the smart-card module (50), wherein information from the incoming write command is incorporated into the produced command.

9. The data carrier (10) according to any of the claims 6 to 8, **characterized in that** the control unit (44) is adapted to produce from a response of the smart-card module (50) a response to a read command according to the mass-memory access protocol, wherein information from the response by the smart-card module (50) is incorporated into the produced response.

10. The data carrier (10) according to any of the claims 6 to 9, **characterized in that** in the commands and responses according to the protocol employed by the internal interface (54) of the smart-card module (50) there are embedded commands and responses according to an Internet protocol.

11. The data carrier (10) according to claim 10, **characterized in that** the Internet protocol is any one of the protocols HTTP or HTTPS or TCP/IP.

12. The data carrier (10) according to any of the claims 6 to 11, **characterized in that** the data carrier (10) is adapted to be recognized and addressed as a mass memory by an external terminal (12).

13. The data carrier (10) according to any of the claims 6 to 13, **characterized in that** the program code (58) implements, upon execution by a terminal (12), a link module (28) on the terminal (12).

14. The data carrier (10) according to claim 13, **characterized in that** the data carrier (10) is adapted to be recognized as a mass memory by the external terminal (12) when the data carrier (10) is connected to a mass-memory interface (42) of the terminal (12), and that in so doing the program code (58) is loaded into the terminal (12) and executed by the terminal (12).

15. The data carrier (10) according to claim 13 or claim 14, **characterized in that** the program code (58) is adapted, upon execution on the external terminal (12), to cause the terminal (12) to repeatedly send read commands according to the mass-memory access protocol to the data carrier (10) in order to give the data carrier (10) an opportunity for transmitting information to the terminal (12) which is embedded in at least one response to at least one of the read commands.

16. A system, comprising a terminal (12) and a data carrier (10) connected thereto via a mass-memory interface (42), wherein the data carrier (10) is configured according to any of the claims 6 to 15, and wherein the terminal (12) has an operating system (22) and a link module (28) which are adapted to carry out a conversion between commands and responses according to an Internet protocol and commands and responses according to the mass-memory access protocol.

## Revendications

1. Procédé de traitement de demandes par un support de données portable (10), cependant que :
- le support de données (10) est, par l'intermédiaire d'une interface externe (52), connecté à un terminal externe (12),
- le support de données (10) est reconnu par le terminal externe (12),
- par le support de données (10), un code de programme (58) est transmis au terminal (12) et exécuté par ce dernier,
- l'exécution amène le terminal (12) à établir, par l'intermédiaire de l'interface (52), un premier canal virtuel de communication (76) vers le support de données (10) ;
- le support de données (10) reçoit, par l'intermédiaire du premier canal virtuel de communication (76), conformément à un protocole d'accès mémoire de masse, un ordre d'écriture dans lequel une demande est insérée conformément à un protocole Internet,
- le support de données (10) détermine la demande à partir de l'ordre d'écriture et, en ayant recours à un serveur Internet (72) intégré dans le support de données (10), génère une réponse, et
- le support de données (10) délivre sous forme d'une réponse la réponse générée, conformément au protocole d'accès mémoire de masse, par l'intermédiaire du premier canal virtuel de communication (76).

2. Procédé selon la revendication 1, **caractérisé en ce que** la réponse délivrée conforme au protocole d'accès mémoire de masse est une réponse à un ordre de lecture conforme au protocole d'accès mémoire de masse arrivé au support de données (10) par l'intermédiaire de l'interface externe (52).

3. Procédé de délivrance de demandes par un support de données portable (10), cependant que :
- le support de données (10) est, par l'intermédiaire d'une interface externe (52), connecté à un terminal externe (12),
- le support de données (10) est reconnu par le terminal externe (12),
- par le support de données (10), un code de programme (58) est transmis au terminal (12) et exécuté par ce dernier,
- l'exécution amène le terminal (12) à établir, par l'intermédiaire de l'interface (52), un deuxième canal virtuel de communication (78) vers le support de données (10) ;
- le support de données (10) reçoit, par l'intermédiaire du deuxième canal virtuel de communication (78), conformément à un protocole d'accès mémoire de masse, un ordre de lecture,
- le support de données (10) génère, en ayant recours à un client Internet (74) intégré dans le support de données (10), une demande conformément à un protocole Internet,
- le support de données (10) génère une réponse à l'ordre de lecture conformément au protocole d'accès mémoire de masse, la demande étant, conformément au protocole Internet, insérée dans cette réponse générée, et
- le support de données (10) délivre, conformément au protocole d'accès mémoire de masse, par l'intermédiaire du deuxième canal virtuel de communication (78), la réponse générée.

4. Procédé selon une des revendications de 1 à 3, **caractérisé en ce que** le protocole Internet d'un des protocoles est HTTP ou HTTPS ou TCP/IP, et **en ce que** le protocole d'accès mémoire de masse comporte des ordres qui sont prévus pour la lecture de données depuis une zone mémoire d'une mémoire de masse et pour l'entrée de données dans une zone mémoire d'une mémoire de masse.

5. Support de données portable (10) comprenant une unité de commande (44), une mémoire (48) et un module carte à puce (50), le support de données étant configuré pour exécuter un procédé selon une des revendications de 1 à 3.

6. Support de données portable (10) selon la revendication 5, **caractérisé en ce qu'**il comporte une interface externe (52) par le biais de laquelle le support de données (10) peut être accosté par l'intermédiaire d'un protocole d'accès mémoire de masse,
- le module carte à puce (50) comportant une interface interne (54) et étant configuré pour mettre à disposition une fonctionnalité d'un serveur Internet (72) et/ou d'un client Internet (74), et
- l'unité de commande (44) étant configurée pour la conversion entre ordres et réponses conformément au protocole d'accès mémoire de masse et entre réponses et ordres conformément à un protocole utilisé par l'interface interne (54) du module carte à puce (50),
- cependant que, dans le support de données (10), un code de programme (58) est mémorisé, lequel peut être lu et exécuté par un terminal (12).

7. Support de données (10) selon la revendication 6, **caractérisé en ce que** l'unité de commande (44) est configurée pour, au moyen de la présence d'un identificateur préétabli dans un ordre arrivant, constater conformément au protocole d'accès mémoire de masse si l'ordre contient une demande adressée au module carte à puce (50).

8. Support de données (10) selon la revendication 6 ou selon la revendication 7, **caractérisé en ce que** l'unité de commande (44) est configurée pour, à partir d'un ordre d'écriture arrivant, conforme au protocole d'accès mémoire de masse, générer un ordre conforme au protocole utilisé par l'interface interne (54) du module carte à puce (50), des informations provenant de l'ordre d'écriture arrivant étant reprises dans l'ordre généré.

9. Support de données (10) selon une des revendications de 6 à 8, **caractérisé en ce que** l'unité de commande (44) est configurée pour, à partir d'une réponse du module carte à puce (50), générer conformément au protocole d'accès mémoire de masse une réponse à un ordre de lecture, des informations provenant de la réponse du module carte à puce (50) étant reprises dans la réponse générée.

10. Support de données (10) selon une des revendications de 6 à 9, **caractérisé en ce que**, dans les ordres et réponses conformes au protocole utilisé par l'interface interne (54) du module carte à puce (50), des ordres et réponses conformes à un protocole Internet sont insérés.

11. Support de données (10) selon la revendication 10, **caractérisé en ce que** le protocole Internet d'un des protocoles est HTTP ou HTTPS ou TCP/IP.

12. Support de données (10) selon une des revendications de 6 à 11, **caractérisé en ce que** le support de données (10) est configuré pour être reconnu et accosté en tant que mémoire de masse par un terminal externe (12).

13. Support de données (10) selon une des revendications de 6 à 13, **caractérisé en ce que** le code de programme (58), quand il est exécuté par un terminal (12), met en oeuvre sur le terminal (12) un module d'interconnexion (28).

14. Support de données (10) selon la revendication 13, **caractérisé en ce que** le support de données (10) est configuré pour être reconnu en tant que mémoire de masse par un terminal externe (12) quand le support de données (10) est raccordé à une interface de mémoire de masse (42) du terminal (12), et **en ce que**, en l'occurrence, le code de programme (58) est chargé dans le terminal (12) et est exécuté par le terminal (12).

15. Support de données (10) selon la revendication 13 ou 14, **caractérisé en ce que** le code de programme (58) est configuré pour, lors d'une exécution sur le terminal externe (12), amener le terminal (12) à envoyer de manière répétitive des ordres de lecture conformes au protocole d'accès mémoire de masse au support de données (10) afin de donner au support de données (10) l'occasion de transférer au terminal (12) des informations insérées dans au moins une réponse à au moins un des ordres de lecture.

16. Système comprenant un terminal (12) et un support de données (10) y étant raccordé par l'intermédiaire d'une interface de mémoire de masse (42), le support de données (10) étant réalisé selon une des revendications de 6 à 15, et le terminal (12) comportant un système d'exploitation (22) et un module d'interconnexion (28) qui sont configurés pour exécuter une conversion entre ordres et réponses conforme à un protocole Internet et entre ordres et réponses conforme au protocole d'accès mémoire de masse.
